# FASCICULE DE BREVET EUROPEEN

(11) **EP 0 507 666 B1**
(45) Date de publication et mention de la délivrance du brevet: **22.06.1994**
(21) Numéro de dépôt: 92400891.5
(22) Date de dépôt: 31.03.1992
(51) Int. Cl.: F16F 1/36, F01N 3/28

(54) **Tampon élastique en fil métallique**
Elastischer Puffer aus Metalldraht
Elastic cushion made of metallic wire

(30) Priorité: 05.04.1991 FR 9104183
(43) Date de publication de la demande: 07.10.1992
(73) Titulaire: SOCIETE JACQUES DUBOIS, F-76360 Barentin (FR)
(72) Inventeur: Brandener, Louis, F-78300 Poissy (FR)
(74) Mandataire: Fruchard, Guy

(56) Documents cités:
- EP-A- 0 447 294
- FR-A- 2 626 041
- GB-A- 836 519

## Description

La présente invention concerne un tampon élastique en fil métallique.

On connaît des tampons élastiques antivibratoires qui sont réalisés en particulier à partir d'une bande de tricot métallique enroulée sur elle-même pour former une préforme cylindrique pleine ou annulaire qui est ensuite comprimée axialement dans un moule de façon à entremêler les mailles du tricot et donner au tampon une cohésion adaptée à la charge à laquelle le tampon est soumis lors de son utilisation.

Les déflections subies par un tampon sous charge sont d'autant plus grandes que les charges sont plus élevées et que la hauteur initiale sous charge nulle du tampon est plus grande pour une densité donnée de tricot.

Pour supporter des charges statiques élevées et néanmoins permettre au tampon de fléchir sous l'effet de surcharges momentanées, il est nécessaire de donner au tampon une hauteur importante par rapport à son diamètre extérieur. Le rapport de la hauteur au diamètre peut ainsi atteindre et même largement dépasser un.

Lorsqu'un manchon, et plus particulièrement un manchon de grande hauteur par rapport à son diamètre, est soumis à une charge axiale élevée, il a tendance à se déformer, sa surface latérale prenant alors l'aspect d'un tonneau. Il en résulte une perte de raideur du tampon et une détérioration de ses performances.

Pour pallier cet inconvénient, on a proposé jusqu'à maintenant d'envelopper la bande de fil métallique ou le tampon lui-même avec une feuille métallique mince ou encore de disposer des anneaux métalliques autour du tampon. Ces dispositifs présentent l'avantage de donner une bonne raideur radiale mais diminuent la flexibilité axiale du tampon dont les propriétés antivibratoires sont alors affectées.

On a encore envisagé de disposer autour du tampon une mince bande de fil métallique enroulé en hélice et s'imbriquant lors de la compression axiale avec la bande de tricot métallique enroulée en spirale. Cette solution est satisfaisante tant du point de vue de la raideur radiale obtenue que du maintien de la flexibilité axiale du tampon mais elle est relativement onéreuse et d'une mise en oeuvre complexe.

Selon l'invention, on propose un tampon élastique comportant une série de tours d'une bande réalisée à partir d'un fil métallique élastique dans lequel les tours sont disposés selon au moins deux couches hélicoïdales de pas inverses.

Ainsi, sans qu'il soit nécessaire de disposer un autre matériau autour du tampon métallique, on a constaté que les mailles du fil métallique sont fortement imbriquées les unes dans les autres tant dans le sens radial que dans le sens axial de sorte que l'on obtient des performances satisfaisantes tant du point de vue de la résistance à la déformation radiale que de la flexibilité axiale.

De préférence, le tampon selon l'invention est réalisé selon un procédé comportant les étapes de réaliser une préforme sensiblement cylindrique par enroulement hélicoïdal selon au moins deux couches de pas inverse d'une bande réalisée à partir d'un fil métallique élastique, et comprimé axialement à la préforme.

Selon des aspects avantageux de l'invention, l'enroulement hélicoïdal comporte des tours qui se chevauchent et la bande a une largeur sensiblement égale à une hauteur du tampon après compression axiale.

D'autres caractéristiques et avantages de l'invention apparaîtront à la lecture de la description qui suit d'un mode de réalisation particulier non limitatif de l'invention en liaison avec les dessins ci-joints parmi lesquels :
- la figure 1 est une vue en perspective partiellement écorchée d'une préforme de tampon élastique selon l'invention,
- la figure 2 est une vue en perspective du tampon obtenu après compression axiale de la préforme.

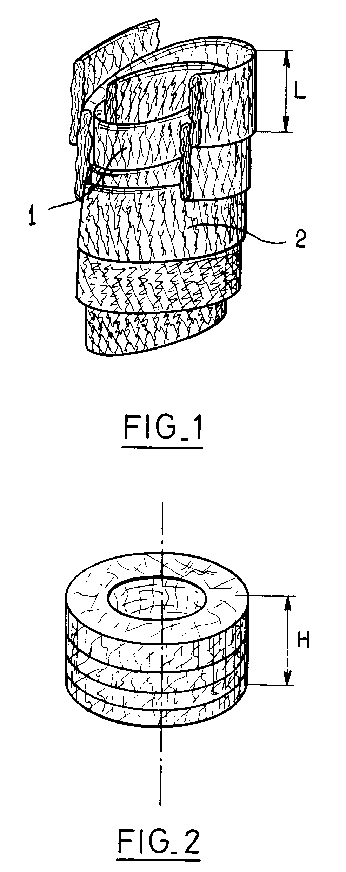

En référence aux figures, le tampon selon l'invention est réalisé à partir d'une bande en fil métallique élastique, par exemple une bande obtenue par mise à plat d'un tricot métallique tubulaire. La bande en fil métallique est enroulée selon au moins une première couche 1 comportant des tours qui se chevauchent, et une seconde couche 2 comportant également des tours qui se chevauchent et sont disposés selon un pas inverse du pas de la première couche. On remarquera que la préforme ainsi obtenue peut être réalisée en continu par enroulement de la bande sur un mandrin en la déplaçant latéralement selon une première direction, par exemple en descendant comme illustré par la figure 1, puis en inversant le sens de déplacement latéral de la bande pour que celle-ci forme une deuxième couche recouvrant la première couche selon un pas inverse, par exemple en remontant comme illustré sur la figure 1. La préforme obtenue peut être maintenue soit par aiguilletage de l'extrémité de la bande sur un tour de bande immédiatement adjacent, soit encore par un agrafage ou par la mise en place d'anneaux de maintien.

La préforme est ensuite mise en place dans une matrice. Dans le cas où l'on a prévu des anneaux de maintien, ceux-ci sont de préférence retirés au moment de l'introduction dans la matrice. Puis la préforme est comprimée axialement et l'on obtient alors le tampon élastique représenté sur la figure 2. Sur cette figure, on a illustré les tours de bande extérieurs après compression avec un trait fort bien qu'en pratique la limite entre deux tours de bande soit difficilement perceptible sur le tampon après compression axiale en raison de l'enchevêtrement des mailles de fil métallique.

En pratique, on a constaté qu'une bande ayant une largeur L sensiblement égale ou légèrement inférieure à la hauteur H du tampon après compression axiale donne de très bons résultats. Cette caractéristique n'est toutefois pas fondamentale. En particulier, on peut utiliser une bande de même largeur pour réaliser des tampons de différentes hauteurs, le nombre de tours étant simplement adapté à la hauteur désirée du tampon élastique en fonction du degré de compression prévu lors de la compression axiale.

Bien entendu l'invention n'est pas limitée au mode de réalisation décrit et on peut y apporter des variantes sans sortir du cadre de l'invention. En particulier, bien que le tampon élastique selon l'invention soit de préférence réalisé à partir d'une bande de fil métallique tricoté, on peut également réaliser celui-ci à partir d'une bande de fil métallique tissée.

De même, bien que dans le mode de réalisation illustré le tampon élastique soit annulaire, on peut réaliser un tampon plein en enroulant la bande sur un mandrin de très faible diamètre de sorte que l'ouverture axiale de la préforme disparaisse lors de la compression axiale.

Le tampon selon l'invention peut également être rendu étanche pour servir de bague élastique dans un accouplement d'échappement de moteur à explosion. Dans ce cas l'étanchéité est obtenue par exemple en enroulant un feuillard métallique sur le mandrin avant d'enrouler la bande de fil métallique. Ce feuillard se plisse lors de la compression axiale de sorte qu'il assure une étanchéité sans modifier de façon sensible la raideur axiale du tampon.

## Revendications

1. Tampon élastique comportant une série de tours d'une bande réalisée à partir d'un fil métallique élastique caractérisé en ce que les tours sont disposés selon au moins deux couches hélicoïdales de pas inverse.

2. Procédé de réalisation d'un tampon élastique selon la revendication 1 caractérisé en ce qu'il comporte les étapes de réaliser une préforme sensiblement cylindrique par enroulement hélicoïdal selon au moins deux couches (1,2) de pas inverse d'une bande réalisée à partir d'un fil métallique élastique, et comprimer axialement la préforme.

3. Procédé selon la revendication 2 caractérisé en ce que l'enroulement hélicoïdal comporte des tours qui se chevauchent.

4. Procédé selon la revendication 2 ou la revendication 3, caractérisé en ce que la bande a une largeur (L) sensiblement égale à une hauteur (H) du tampon après compression axiale.

## Patentansprüche

1. Elastischer Puffer umfassend eine Reihe von Windungen eines aus einem elastischen Metalldraht hergestellten Bandes, dadurch gekennzeichnet, daß die Windungen in zumindest zwei gegenläufigen schraubenförmigen Schichten vorgesehen sind.

2. Verfahren zur Herstellung eines elastischen Puffers gemäß Anspruch 1, gekennzeichnet durch den Schritt der Herstellung eines im wesentlichen zylindrischen Vorformlings durch schraubenförmiges Wickeln eines aus elastischem Metalldraht hergestellten Bandes in wenigstens zwei gegenläufigen Schichten (1, 2) und den Schritt der axialen Komprimierung des Vorformlings.

3. Verfahren nach Anspruch 2, dadurch gekennzeichnet, daß die schraubenförmige Wicklung einander überlappende Windungen aufweist.

4. Verfahren nach Anspruch 2 oder 3, dadurch gekennzeichnet, daß das Band eine Breite (L) hat, die im wesentlichen gleich einer Höhe (H) des Puffers nach der axialen Komprimierung ist.

## Claims

1. A resilient buffer comprising a series of turns of a strip made from resilient metal wire, characterized in that the turns are disposed in at least two helical layers of opposite pitch.

2. A method of making a resilient buffer according to claim 1, characterized in that it comprises the step of making a substantially cylindrical preform by helically winding a strip made of resilient metal wire in at least two layers (1, 2) of opposite pitch, and the step of compressing the preform axially.

3. A method according to claim 2, characterized in that the helical winding includes turns that overlap.

4. A method according to claim 2 or claim 3, characterized in that the width of the strip (L) is substantially equal to the height (H) of the buffer after axial compression.
